# DEMANDE DE BREVET EUROPEEN

(11) **EP 4 660 364 A1**
(43) Date de publication de la demande: **10.12.2025**
(21) Numéro de dépôt: 25180251.8
(22) Date de dépôt: 02.06.2025
(51) Int. Cl.: D05B 93/00, B29C 65/62, B32B 7/09, B60N 2/00, B60R 13/02

(54) **ELÉMENT DE GARNISSAGE COMPRENANT UN PROFILÉ DE POSITIONNEMENT D'UNE LIGNE DE COUTURE ET PROCÉDÉ DE FABRICATION ASSOCIÉ**

(30) Priorité: 04.06.2024 FR 2405837
(71) Demandeur: Faurecia Intérieur Industrie, 92000 Nanterre (FR)
(72) Inventeur: BONAVENTURE, Franck, 95270 BELLOY EN FRANCE (FR); LE BORGNE, Olivier, 60650 SAINT PAUL (FR)
(74) Mandataire: Lavoix

(57) **Abrégé**

L'élément de garnissage (10) comprend :
- un support (12) comportant un sillon (18) délimitant une gorge (20) et comprenant une paroi de fond (22), une première paroi latérale (24) et une deuxième paroi latérale (26) ;
- une couche de revêtement (40) ;
- une couture (50) traversant la couche de revêtement (40) et s'étendant le long d'une ligne de couture (LC) ; et
- un profilé de positionnement (60) fixé à la couche de revêtement (40) par la couture (50).

Le support (12) comporte en outre une nervure (30), le profilé de positionnement (60) coopérant avec la première paroi latérale (24), la deuxième paroi latérale (26) et la nervure (30) pour positionner la ligne de couture (LC) en regard de la nervure (30).

## Description

La présente invention concerne un élement de garnissage de véhicule comprenant :
- un support comportant au moins un sillon délimitant une gorge s'étendant en creux à partir d'une surface externe du support, le sillon comprenant une paroi de fond, une première paroi latérale et une deuxième paroi latérale délimitant la gorge ;
- au moins une couche de revêtement comportant une face interne s'étendant sur la surface externe du support et une face externe libre opposée à la face interne ;
- au moins une couture traversant l'au moins une couche de revêtement depuis la face interne jusqu'à la face externe libre et s'étendant le long d'une ligne de couture ;
- au moins un profilé de positionnement fixé à l'au moins une couche de revêtement par l'au moins une couture et configuré pour positionner la ligne de couture en regard de la gorge.

Dans un tel élément de garnissage, le profilé de positionnement permet de positionner la couture sur le support en regard de la gorge.

Toutefois, un tel élément de garnissage n'est pas entièrement satisfaisant. En effet, le positionnement d'une couture décoratice (non fonctionelle) n'est pas précis. En outre, la fixation du profilé de positionnement sur le support est peu robuste.

Il existe donc un besoin de fournir un élément de garnissage permettant un positionnement précis et durable d'une ligne de couture, afin notamment de permettre à un opérateur en usine de positionner la couture à sa position précise et ce de manière rapide et répétable.

Un but de l'invention est alors de proposer un élément de garnissage permettant de positionner précisément et durablement une ligne de couture s'étendant à travers une couche de revêtement.

A cet effet, l'invention a pour objet un élément de garnissage du type susmentionné et dans lequel le support comporte en outre une nervure s'étendant depuis la paroi de fond du sillon dans la gorge, le profilé de positionnement coopérant avec la première paroi latérale, la deuxième paroi latérale et la nervure pour positionner la ligne de couture en regard de la nervure.

La coopération du profilé de positionnement avec la première paroi latérale et la deuxième paroi latérale du sillon ainsi qu'avec la nervure du support permet de positionner très précisément la ligne de couture et d'assurer un positionnement durable dans le temps. En effet, la coopération entre le profilé de positionnement et le support est robuste.

Suivant d'autres aspects avantageux de l'invention, l'élément de garnissage comprend une ou plusieurs des caractéristiques suivantes, prises isolément ou suivant toutes les combinaisons techniquement possibles :
- le profilé de positionnement présente une section droite en forme générale de U, le profilé de positionnement comprenant :
   - une partie principale formant une base du U et s'étendant en regard de la nervure ; et
   - deux parties auxiliaires formant des branches du U et s'étendant à partir de deux extrémités latérales opposées de la partie principale vers la paroi de fond du sillon de part et d'autre de la nervure ;
- le profilé de positionnement comprend une rainure de pliage s'étendant entre l'une parmi les deux parties auxiliaires et la partie principale et une rainure de pliage s'étendant entre l'autre parmi les deux parties auxiliaires et la partie principale ;
- l'au moins une couture traverse la partie principale du profilé de positionnement et solidarise l'au moins une couche de revêtement à la partie principale du profilé de positionnement ;
- la partie principale du profilé de positionnement présente une surface externe s'étendant contre la face interne de l'au moins une couche de revêtement, la surface externe de la partie principale s'étendant dans le prolongement de la surface externe du support ;
- les parties auxiliaires du profilé de positionnement comportent chacune au moins une saillie externe en appui sur les parois latérales du sillon ;
- les parties auxiliaires du profilé de positionnement comportent chacune au moins une saillie interne en appui sur la nervure du support ;
- le profilé de positionnement est réalisé en élastomère thermoplastique, notamment en élastomère thermoplastique de polyester, de préférence du TPE-E ;
- l'élément de garnissage comprend une unique couche de revêtement, l'au moins une couture traversant la couche de revêtement depuis la face interne jusqu'à la face externe libre ; et
- la gorge s'étend selon un parcours présentant au moins une portion rectiligne et au moins une portion incurvée, l'élément de garnissage comprenant pour chaque portion rectiligne du parcours un profilé de positionnement rectiligne et pour chaque portion incurvée du parcours un profilé de positionnement incurvé.

L'invention concerne en outre un procédé de de fabrication d'un élément de garnissage de véhicule tel que décrit ci-dessus, comprenant les étapes suivantes :
- réalisation du support, de l'au moins une couche de revêtement et du profilé de positionnement;
- réalisation de l'au moins une couture de sorte qu'elle traverse l'au moins une couche de revêtement et le profilé de positionnement et qu'elle solidarise l'au moins une couche de revêtement au profilé de positionnement ;
- agencement du profilé de positionnement de sorte que le profilé de positionnement coopère avec la première paroi latérale du sillon, la deuxième paroi latérale du sillon et la nervure pour maintenir la ligne de couture en regard de la nervure.

Suivant d'autres aspects avantageux de l'invention, l'élément de garnissage comprend une ou plusieurs des caractéristiques suivantes, prises isolément ou suivant toutes les combinaisons techniquement possibles :
- lors de l'étape d'agencement du profilé de positionnement, une partie principale du profilé de positionnement formant une base de U est agencée en regard de la nervure et deux parties auxiliaires du profilé de positionnement formant des branches du U à partir de deux extrémités latérales opposées de la partie principale s'étendent vers la paroi de fond du sillon de part et d'autre de la nervure ;
- lors de l'étape de réalisation du support, de l'au moins une couche de revêtement et du profilé de positionnement, le profilé de positionnement est réalisé de sorte que la partie principale et les parties auxiliaires s'étendent sensiblement dans un même plan,
   le procédé comprenant en outre entre l'étape de réalisation de l'au moins une couture et l'étape d'agencement du profilé de positionnement, une étape de pliage du profilé de positionnement comprenant un déplacement en rotation de l'une parmi les deux parties auxiliaires autour d'une rainure de pliage du profilé de positionnement pour former une première branche du U et un déplacement en rotation de l'autre parmi les deux parties auxiliaires autour d'une rainure de pliage du profilé de positionnement pour former une deuxième branche du U ;
- lors de l'étape de réalisation de l'au moins une couture, l'au moins une couture est réalisée de sorte qu'elle traverse la partie principale du profilé de positionnement et qu'elle solidarise l'au moins une couche de revêtement et la partie principale du profilé de positionnement ;
- lors de l'étape d'agencement du profilé de positionnement, le profilé de positionnement est agencé de sorte qu'une surface externe de la partie principale du profilé de positionnement s'étendant contre la face interne de l'au moins une couche de revêtement s'étende dans le prolongement de la surface externe du support.

L'invention apparaîtra plus clairement à la lecture de la description qui va suivre, donnée uniquement à titre d'exemple non limitatif, et faite en référence aux dessins dans lesquels :
[Fig. 1] - la figure 1 est une représentation schématique simplifiée en vue de dessus d'un élément de garnissage selon l'invention ;
[Fig. 2] - la figure 2 est une représentation schématique simplifiée en coupe selon un plan de coupe II-II d'une partie de l'élément de garnissage de la figure 1 ;
[Fig. 3] - la figure 3 est une représentation schématique simplifiée en coupe d'une section droite du profilé de positionnement, d'une partie de la couche de revêtement et d'une partie de la couture de l'élément de garnissage de la figure 1, avant que le profilé de positionnement de subisse l'étape de pliage du procédé de fabrication selon l'invention ;
[Fig. 4] - la figure 4 est une représentation schématique simplifiée en coupe de l'étape de pliage du procédé de fabrication selon l'invention ;
[Fig. 5] - la figure 5 est un ordinogramme d'un procédé de fabrication de l'élément de garnissage, selon l'invention.

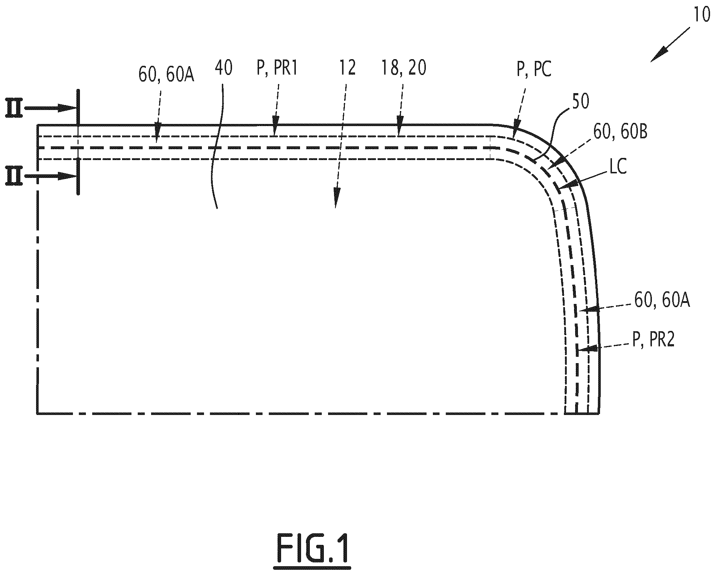

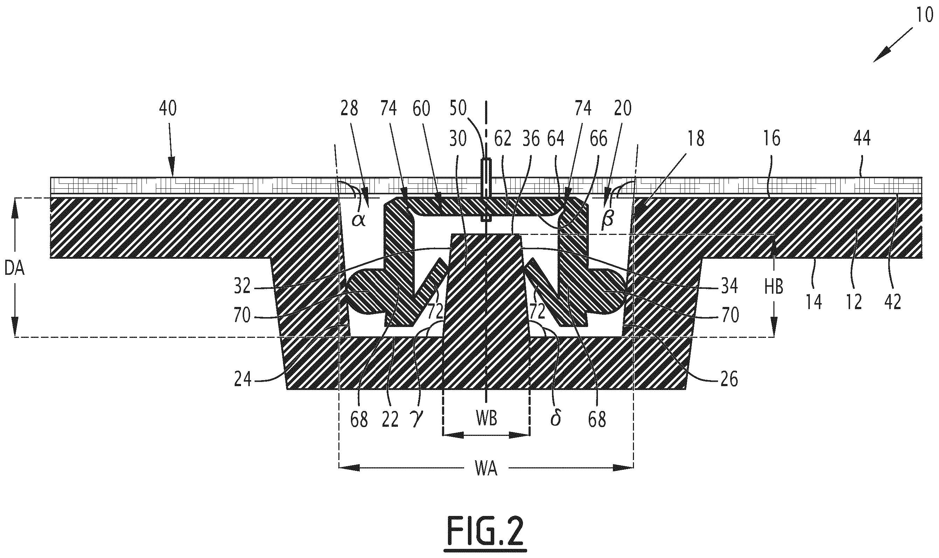

En référence aux figures 1 et 2, on décrit un élément de garnissage 10 selon l'invention.

L'élément de garnissage 10 est notamment destiné à être monté sur une partie de véhicule et à s'étendre dans un habitacle du véhicule.

Dans la description, sauf lorsqu'indiqué autrement, les termes « interne » et « intérieur » désignent des éléments tournés vers la partie du véhicule sur laquelle l'élément de garnissage 10 est destiné à être monté et les termes « externe » et « extérieur » désignent des éléments tournés vers l'habitacle du véhicule.

L'élément de garnissage 10 comprend un support 12, au moins une couche de revêtement 40, au moins une couture 50 et au moins un profilé de positionnement 60.

Dans ce qui suit, on décrit un élément de garnissage 10 comprenant une seule couche de revêtement 40, une seule couture 50 et une pluralité de profilés de positionnement 60. En particulier, dans ce qui suit, on décrit un exemple d'élément de garnissage 10 comprenant pour chaque portion rectiligne PR1, PR2 d'un parcours P d'une gorge 20 du support 12, un profilé de positionnement 60A rectiligne et pour chaque portion incurvée PC du parcours P de la gorge 20, un profilé de positionnement 60B incurvé. Bien entendu, l'invention s'applique également lorsque l'élément de garnissage 10 comprend une pluralité de coutures 50 avec des lignes de coutures notamment parallèles entre elles et/ou un seul profilé de positionnement 60.

Le support 12 comprend un corps présentant la forme d'au moins une partie de l'élément de garnissage 10 et par exemple réalisé en un matériau sensiblement rigide. Le **support 12** confère ainsi sa forme et sa rigidité à au moins une partie de l'élément de garnissage 10. Le support 12 peut présenter toute forme souhaitée, telle qu'une forme tridimensionnelle, en fonction de la nature de l'élément de garnissage.

Par exemple, le support 12 est réalisé en matière plastique par exemple un polyolephine ou un styrénique, par exemple par moulage.

En référence à la figure 2, le support 12 comprend une surface interne 14 et une surface externe 16 opposée à la surface interne 14.

Le support 12 comporte en outre au moins un sillon 18 délimitant une gorge 20 s'étendant en creux à partir de la surface externe 16 du support 12. Par « s'étendant en creux à partir de la surface externe », on entend que la gorge 20 forme un renfoncement par rapport au reste de la surface externe 10, comme représenté sur la figure 2.

Toujours en référence à la figure 2, le support 12 comporte en outre une nervure 30 s'étendant depuis une paroi de fond 22 du sillon 18 dans la gorge 20.

Toujours en référence à la figure 2, le sillon 18 comprend la paroi de fond 22, une première paroi latérale 24 et une deuxième paroi latérale 26.

La paroi de fond 22, la première paroi latérale 24 et la deuxième paroi latérale 26 délimitent la gorge 20. En d'autres termes, la gorge 20 est définie comme étant l'espace entre la paroi de fond 22, la première paroi latérale 24, la deuxième paroi latérale 26, notamment en retrait par rapport à la surface externe 16 du support 12.

Par exemple, la première paroi latérale 24 s'étend à partir de la surface externe 16 du support 12 vers la paroi de fond 22 selon une direction allant vers la surface interne 14 et forme un angle α non-nul avec la surface externe 16 du support 12. L'angle α est notamment supérieur ou égal à 90°, en particulier supérieur ou égal à 100°.

Par exemple, la deuxième paroi latérale 26 s'étend à partir de la surface externe 16 du support 12 vers la paroi de fond 22 selon une direction allant vers la surface interne 14 et forme un angle β non-nul avec la surface externe 16 du support 12. L'angle β est notamment supérieur ou égal à 90°, en particulier supérieur ou égal à 100°.

Avantageusement, la deuxième paroi latérale 26 et la première paroi latérale 24 convergent l'une vers l'autre en se rapprochant de la paroi de fond 22. Grâce à cette caractéristique, le support 12 présente une dépouille qui facilite le démoulage du support 12.

Par exemple, la paroi de fond 22 s'étend entre la première paroi latérale 24 et la deuxième paroi latérale 26, à leur extrémité écartée de la surface externe 16 du support 12. Selon l'exemple illustré sur la figure 2, la paroi de fond 22 s'étend sensiblement parallèlement à la surface externe 16 du support 12.

Comme illustré sur l'exemple de la figure 2, la gorge 20 comprend une ouverture 28 à l'opposé de la paroi de fond 22.

En référence à l'exemple de la figure 1, la gorge 20 s'étend selon le parcours P. Le parcours P présente au moins une portion rectiligne, notamment une première portion rectiligne PR1 et une deuxième portion rectiligne PR2, et au moins une portion incurvée PC reliant la première portion rectiligne PR1 et la deuxième portion rectiligne PR2.

En réfernce à la figure 2, la largeur WA de la gorge 20 est définie comme étant la distance entre la première paroi latérale 24 et la deuxième paroi latérale 26, notamment au niveau de l'ouverture 28. La largeur WA de la gorge 20 est par exemple sensiblement comprise entre 7 mm et 10 mm.

Toujours en référence à la figure 2, la profondeur DA de la gorge 20 est définie comme étant la distance entre la surface externe 16 du support 12 et la paroi de fond 22 du sillon 18 mesurée selon une direction sensiblement perpendiculaire à un plan d'extension de la surface externe 16. La profondeur DA de la gorge 20 est par exemple sensiblement comprise entre 4 mm et 7 mm.

Selon l'exemple illustré sur la figure 2, la nervure 30 est avantageusement venue de matière avec le support 12, notamment avec le corps du support 12.

Par exemple, la nervure 30 comprend une première paroi latérale 32, une deuxième paroi latérale 34 et une paroi d'extrémité libre 36.

Par exemple, la première paroi latérale 32 s'étend à partir de la paroi de fond 22 du sillon 18 du support 12 vers l'ouverture 28 selon une direction allant vers la surface externe 16 du support 12 et forme un angle γ non-nul avec la paroi de fond 22 du sillon 18. Selon l'exemple illustré sur la figure 2, la première paroi latérale 32 de la nervure 30 s'étend en regard de la première paroi latérale 24 du sillon 18. L'angle γ est notamment supérieur ou égal à 90°, en particulier supérieur ou égal à 100°.

Par exemple, la deuxième paroi latérale 34 s'étend à partir de la paroi de fond 22 du sillon 18 du support 12 vers l'ouverture 28 selon une direction allant vers la surface externe 16 et forme un angle δ non-nul avec la paroi de fond 22 du sillon 18. Selon l'exemple illustré sur la figure 2, la deuxième paroi latérale 34 de la nervure 30 s'étend en regard de la deuxième paroi latérale 26 du sillon 18. L'angle δ est notamment supérieur ou égal à 90°, en particulier supérieur ou égal à 100°.

Avantageusement, la deuxième paroi latérale 34 et la première paroi latérale 32 de la nervure 30 convergent l'une vers l'autre en se rapprochant de l'ouverture 28. Grâce à cette caractéristique, la nervure 30 présente une dépouille qui facilite le démoulage du support 12.

Par exemple, la paroi d'extrémité libre 36 de la nervure 30 s'étend entre la première paroi latérale 32 et la deuxième paroi latérale 34, à leur extrémité écartée de la paroi de fond 22 du sillon 18. Ainsi, la gorge 20 présente une section droite présentant sensiblement la forme d'un U, une première branche du U étant délimitée par la première paroi latérale 24 du sillon 18 et la première paroi latérale 32 de la nervure 30, une deuxième branche du U étant délimitée par la deuxième paroi latérale 26 du sillon 18 et la deuxième paroi latérale 34 de la nervure 30 et la base du U étant délimité entre l'ouverture 28 et la paroi d'extrémité libre 36 de la nervure 30.

La largeur WB de la nervure 30 est définie comme étant la distance entre la première paroi latérale 32 et la deuxième paroi latérale 34, au niveau de la base de la nervure 30, autrement dit au niveau du fond 22 de la gorge 20. La largeur WB de la nervure 30 est par exemple sensiblement comprise entre 1 mm et 3 mm.

La hauteur HB de la nervure 30 est définie comme étant la distance entre la paroi de fond 22 du sillon 18 et la paroi d'extrémité libre 36 de la nervure 30, mesurée selon une direction sensiblement perpendiculaire à un plan d'extension de la paroi de fond 22 du sillon 18. Avantageusement, la hauteur HB de la nervure 30 est inférieure ou égale à la profondeur DA de la gorge 20. Par exemple, la hauteur HB de la nervure 30 est comprise entre 3 mm et 7mm.

La couche de revêtement 40 s'étend sur le support 12. Plus particulièrement, la couche de revêtement comprend une face interne 42 s'étendant en regard de la surface externe 16 du support 12 et une face externe 44 opposée à la face interne 42. La face externe 44 est libre et forme une partie visible de l'élément de garnissage 10 depuis l'habitacle du véhicule dans lequel l'élément de garnissage 10 est destiné à être installé. Par « libre », on entend que la face externe 44 est exposé à l'air ambiant de l'habitacle du véhicule, autrement dit qu'elle n'est pas recouverte par un quelconque élément. La face interne 42 est par exemple appliquée sur la surface externe 16 du support 12. L'épaisseur de la couche de revêtement 40 est définie comme étant la distance entre la face interne 42 et la face externe 44. L'épaisseur de la couche de revêtement 40 est par exemple comprise entre 0,8 mm et 3,5 mm.

Par exemple, la couche de revêtement 40 est réalisée en textile, cuir, élastomère thermoplastique, polyuréthane (PU) ou polychlorure de vinyle (PVC), éventuellement doublé d'une épaisseur de mousse, par exemple à faible densité.

La couche de revêtement 40 est fixée au support 12. Selon un exemple particulier, la couche de revêtement 40, notamment la face interne 42 est collée au support 12, notamment à surface externe 16 du support 12, par exemple en utilisant une colle thermoactivable.

La couche de revêtement 40 recouvre le sillon 18, notamment la gorge 20, en particulier l'ouverture 28.

En référence à la figure 1, la couture 50 s'étend le long d'une ligne de couture LC.

En référence à la figure 2, la couture 50 traverse la couche de revêtement 40 depuis la face interne 42 jusqu'à la face externe 44.

Toujours en référence à la figure 2, la couture 50 traverse en outre le profilé de positionnement 60 correspondant et solidarise la couche de revêtement 50 au profilé de positionnement 60 correspondant.

En particulier, la couture 50 traverse une partie principale 62 du profilé de positionnement 60 correspondant et solidarise la couche de revêtement 50 à la partie principale 62 du profilé de positionnement 60 correspondant.

La couture 50 est préférentiellement décorative. Elle est adaptée pour conférer à l'élément de garnissage 10 un aspect souhaité, sans notamment avoir de fonction d'assemblage de deux couches de revêtement ensemble. En particulier, la couture 50 est destinée à être visible sur la face externe libre 44 de la couche de revêtement 40.

Par exemple, la ligne de couture LC s'étend selon un parcours formant un motif spécifique.

Dans un mode de réalisation non représenté, l'élément de garnissage 10 comprend une pluralité de lignes de couture, notamment parallèles entre elles. Dans ce mode de rélisation, plusieurs coutures 50 de lignes de couture différentes traversent la même partie principale 62 du profilé.

La couture 50 est par exemple réalisée en polyesther (PES).

Dans ce qui suit, on décrit un seul profilé de positionnement 60. Bien entendu, cette description s'applique également lorsque l'élément de garnissage 10 comprend plusieurs profilés de positionnement 60, comme cela est le cas dans l'exemple de la figure 1.

Le profilé de positionnement 60 est fixé à la couche de revêtement 40.

En particulier, le profilé de positionnement 60 est également fixé au support 12, notamment par coopération, notamment par friction, du profilé de positionnement 60 avec le sillon 18 et la nervure 30.

Le profilé de positionnement 60 est configuré pour positionner la ligne de couture LC en regard de la gorge 20.

Le profilé de positionnement 60 coopère avec la première paroi latérale 24 du sillon 18, la deuxième paroi latérale 26 du sillon 18 et la nervure 30 du support 12 pour positionner la ligne de couture LC en regard de la nervure 30.

Avantageusement, le profilé de positionnement est réalisé en élastomère thermoplastique, notamment en élastomère thermoplastique de polyester (TPE-E).

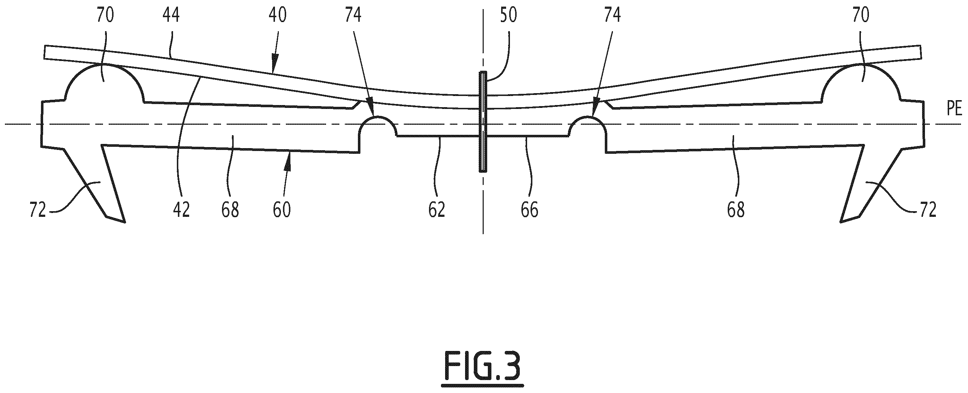

En particulier, en référence aux figures 3 à 4, le profilé de positionnement 60 présente une section droite en forme générale de U.

Notamment, le profilé de positionnement 60 comprend une partie principale 62 et deux partie auxiliaires 68.

La partie principale 62 du profilé de positionnement 60 forme une base du U et s'étend en regard de la nervure 30.

Avantageusement, la partie principale 62 du profilé de positionnement 60 présente une surface externe 64 s'étendant contre la face interne 42 de la couche de revêtement 40. En particulier, la surface externe 64 de la partie principale 62 du profilé de positionnement 60 s'étend dans le prolongement de la surface externe 16 du support 12. Ceci permet de donner un aspect évoluant continuellement pour la couche de revêtement 40 et ce malgré la présence de l'ouverture 28.

La partie principale 62 du profilé de positionnement 60 présente par exemple en outre une surface interne 66 opposée à la surface externe 64, s'étendant en regard de la nervure 30, en particulier en regard de la paroi d'extrémité libre 36 de la nervure 30.

Les deux parties auxiliaires 68 du profilé de positionnement 60 forment des branches du U et s'étendent à partir de deux extrémités latérales opposées de la partie principale 62 du profilé de positionnement 60 vers la paroi de fond 22 du sillon 18 de part et d'autre de la nervure 30.

Avantageusement, les parties auxiliaires 68 du profilé de positionnement 60 comportent chacune au moins une saillie externe 70 en appui sur les parois latérales 24, 26 du sillon 18. Par exemple, l'au moins une saillie externe 70 s'étend depuis la partie auxiliaire 68 correspondante du profilé de positionnement 60 vers la paroi latérale 24, 26 correspondante du sillon 18. Ici, par « saillie externe », on entend que les saillies externes sont orientées vers les parois latérales 24, 26 du sillon 18. Préférentiellement, l'au moins une saillie externe 70 forme une protubérance arrondie ou bombée.

Encore avantageusement, les parties auxiliaires 68 du profilé de positionnement 60 comportent chacune au moins une saillie interne 72 en appui sur la nervure 30 du support 12, en particulier sur la paroi latérale 32, 34 correspondante de la nervure 30. Par exemple, l'au moins une saillie interne 72 s'étend depuis la partie auxiliaire 68 correspondante du profilé de positionnement 60 vers la nervure 30, en particulier vers la paroi latérale 32, 34 correspondante de la nervure 30. Ici, par « saillie interne », on entend que les saillies internes 72 sont orientées vers la nervure 30.

La coopération de l'au moins une saillie externe 70 avec les parois latérales 24, 26 du sillon 18 et/ou de l'au moins une saillie interne 72 avec la nervure 30 du support 12, en particulier par friction, permet de correctement positionner le profilé de positionnement 60 dans la gorge 20.

Avantageusement, le profilé de positionnement 60 comprend en outre une rainure de pliage 74 s'étendant entre l'une parmi les deux parties auxiliaires 68 et la partie principale 62 et une rainure de pliage 74 s'étendant entre l'autre parmi les deux parties auxiliaires 68 et la partie principale 62. Ces rainures de pliage 74 facilitent le pliage du profilé de positionnement 60 lors d'un procédé 100 de fabrication de l'élément de garnissage 10 décrit ci-dessous.

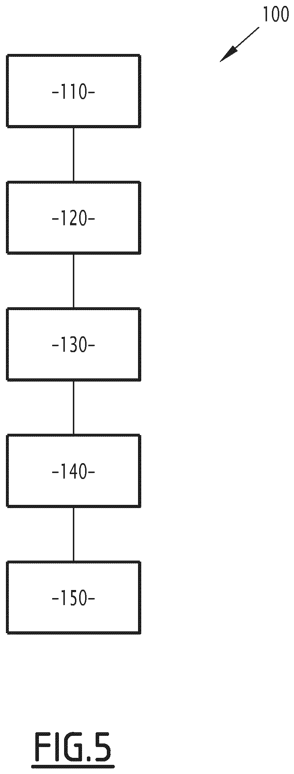

En référence à la figure 5, on décrit un procédé 100 de fabrication de l'élément de garnissage 10.

Le procédé 100 comprend une étape 110 de réalisation du support 12, de la couche de revêtement 40 et du profilé de positionnement 60.

Avantageusement, en référence à la figure 3, lors de l'étape 110 de réalisation du support 12, de la couche de revêtement 40 et du profilé de positionnement 60, le profilé de positionnement 60 est réalisé de sorte que la partie principale 62 et les parties auxiliaires 68 s'étendent sensiblement dans un même plan PE. Par exemple, le profilé de positionnement 60 est réalisé par extrusion.

Le procédé 100 comprend en outre une étape 120 de réalisation de la couture 50 de sorte qu'elle traverse la couche de revêtement 40 et le profilé de positionnement 60 et qu'elle solidarise la couche de revêtement 40 au profilé de positionnement 60.

Avantageusement, lors de l'étape 120 de réalisation de la couture 50, la couture 50 est réalisée de sorte qu'elle traverse la partie principale 62 du profilé de positionnement 60 et qu'elle solidarise la couche de revêtement 40 et la partie principale 62 du profilé de positionnement 60.

Le procédé 100 comprend en outre une étape 140 d'agencement du profilé de positionnement 60 de sorte que le profilé de positionnement 60 coopère avec la première paroi latérale 24 du sillon 18, la deuxième paroi latérale 26 du sillon 18 et la nervure 30 pour positionner la ligne de couture LC en regard de la nervure 30.

Avantageusement, lors de l'étape 140 d'agencement du profilé de positionnement 60, la partie principale 62 du profilé de positionnement 60 est agencée en regard de la nervure 30 et les deux parties auxiliaires 68 du profilé de positionnement 60 s'étendent vers la paroi de fond 22 du sillon 18 de part et d'autre de la nervure 30.

En particulier, lors de l'étape d'agencement 140, le profilé de positionnement 60 est inséré dans la gorge 20 de sorte que la partie principale 62 du profilé de positionnement 60 s'étende en regard de la nervure 30 et que les deux parties auxiliaires 68 du profilé de positionnement 60 s'étendent vers la paroi de fond 22 du sillon 18 de part et d'autre de la nervure 30.

Encore avantageusement, lors de l'étape 140 d'agencement du profilé de positionnement 60, le profilé de positionnement 60 est agencé de sorte que la surface externe 64 de la partie principale 62 du profilé de positionnement 60 s'étendant contre la face interne 42 de la couche de revêtement 40 s'étende dans le prolongement de la surface externe 16 du support 12.

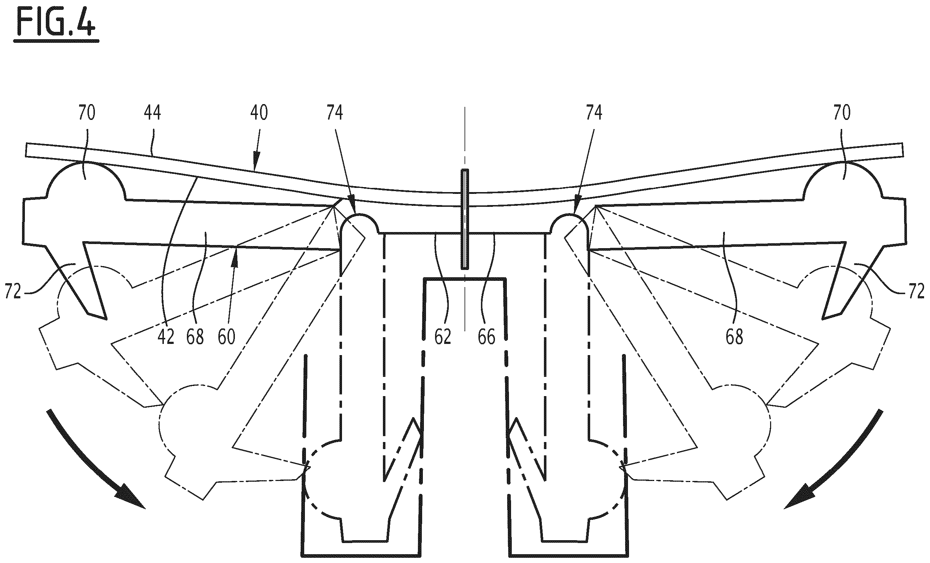

Encore avantageusement, le procédé comprend en outre entre l'étape 120 de réalisation de la couture 50 et l'étape 140 d'agencement du profilé de positionnement 60, une étape 130 de pliage du profilé de positionnement 60, illustrée sur la figure 4. En particulier, l'étape de pliage 130 comprend un déplacement en rotation de l'une parmi les deux parties auxiliaires 68 autour d'une rainure de pliage 74 du profilé de positionnement 60 pour former une première branche du U et un déplacement en rotation de l'autre parmi les deux parties auxiliaires 68 autour d'une rainure de pliage 74 du profilé de positionnement 60 pour former une deuxième branche du U.

Encore avantageusement, le procédé comprend en outre, en particulier après l'étape 140, une étape 150 de fixation de la couche de revêtement 40, notamment la face interne 42, sur le support 12, notamment la surface externe 16. En particulier, la face interne 42 et/ou la surface externe 16 du support 12 est recouverte de colle, notamment thermoactivable. Avantageusement, lors de l'étape 150, la couche de revêtement 40 est collée sur le support 12 par application d'une force sur la couche de revêtement 40 et notamment par application de chaleur sur la couche de revêtement 40 dans le cas où la colle est thermoactivable.

Grâce à l'invention, la ligne de couture LC est très précisément positionnée. Le positionnement de la ligne de couture LC est également durable dans le temps puisque la fixation du profilé de positionnement 60 dans la gorge 20 est solide. La coopération entre le support 12 et le profilé de positionnement 60 permet de maintenir la ligne de couture LC en position et ce en dépit d'éventuels chocs qui serait appliquées sur la couche de revêtement 40 et/ou le profilé de positionnement 60. L'invention permet en outre d'éviter toute ondulation de la couche de revêtement 40 aux abords de la couture 50.

## Revendications

1. Elément de garnissage (10) de véhicule comprenant :
- un support (12) comportant au moins un sillon (18) délimitant une gorge (20) s'étendant en creux à partir d'une surface externe (16) du support (12), le sillon (18) comprenant une paroi de fond (22), une première paroi latérale (24) et une deuxième paroi latérale (26) délimitant la gorge (20) ;
- au moins une couche de revêtement (40) comportant une face interne (42) s'étendant sur la surface externe (16) du support (12) et une face externe (44) libre opposée à la face interne (42) ;
- au moins une couture (50) traversant l'au moins une couche de revêtement (40) depuis la face interne (42) jusqu'à la face externe (44) libre et s'étendant le long d'une ligne de couture (LC) ;
- au moins un profilé de positionnement (60) fixé à l'au moins une couche de revêtement (40) par l'au moins une couture (50) et configuré pour positionner la ligne de couture (LC) en regard de la gorge (20),
**caractérisé en ce que** le support (12) comporte en outre une nervure (30) s'étendant depuis la paroi de fond (22) du sillon (18) dans la gorge (20), le profilé de positionnement (60) coopérant avec la première paroi latérale (24), la deuxième paroi latérale (26) et la nervure (30) pour positionner la ligne de couture (LC) en regard de la nervure (30).

2. Elément de garnissage (10) selon la revendication 1, dans lequel le profilé de positionnement (60) présente une section droite en forme générale de U, le profilé de positionnement (60) comprenant :
- une partie principale (62) formant une base du U et s'étendant en regard de la nervure (30) ; et
- deux parties auxiliaires (68) formant des branches du U et s'étendant à partir de deux extrémités latérales opposées de la partie principale (62) vers la paroi de fond (22) du sillon (18) de part et d'autre de la nervure (30).

3. Elément de garnissage (10) selon la revendication 2, dans lequel le profilé de positionnement (60) comprend une rainure de pliage (74) s'étendant entre l'une parmi les deux parties auxiliaires (68) et la partie principale (62) et une rainure de pliage (74) s'étendant entre l'autre parmi les deux parties auxiliaires (68) et la partie principale (62).

4. Elément de garnissage (10) selon la revendication 2 ou 3, dans lequel l'au moins une couture (50) traverse la partie principale (62) du profilé de positionnement (60) et solidarise l'au moins une couche de revêtement (40) à la partie principale (62) du profilé de positionnement (60).

5. Elément de garnissage (10) selon l'une quelconque des revendications 2 à 4, dans lequel la partie principale (62) du profilé de positionnement (60) présente une surface externe (64) s'étendant contre la face interne (42) de l'au moins une couche de revêtement (40), la surface externe (64) de la partie principale (62) s'étendant dans le prolongement de la surface externe (16) du support (12).

6. Elément de garnissage (10) selon l'une quelconque des revendications 2 à 5, dans lequel les parties auxiliaires (68) du profilé de positionnement (60) comportent chacune au moins une saillie externe (70) en appui sur les parois latérales (24, 26) du sillon (18).

7. Elément de garnissage (10) selon l'une quelconque des revendications 2 à 6, dans lequel les parties auxiliaires (68) du profilé de positionnement (60) comportent chacune au moins une saillie interne (72) en appui sur la nervure (30) du support (12).

8. Elément de garnissage (10) selon l'une quelconque des revendications précédentes, dans lequel le profilé de positionnement (60) est réalisé en élastomère thermoplastique, notamment en élastomère thermoplastique de polyester, de préférence du TPE-E.

9. Elément de garnissage (10) selon l'une quelconque des revendications précédentes, comprenant une unique couche de revêtement (40), l'au moins une couture (50) traversant la couche de revêtement (40) depuis la face interne (42) jusqu'à la face externe (44) libre.

10. Procédé (100) de fabrication d'un élément de garnissage (10) de véhicule selon l'une quelconque des revendications précédentes, comprenant les étapes suivantes :
- réalisation (110) du support (12), de l'au moins une couche de revêtement (40) et du profilé de positionnement (60) ;
- réalisation (120) de l'au moins une couture (50) de sorte qu'elle traverse l'au moins une couche de revêtement (40) et le profilé de positionnement (60) et qu'elle solidarise l'au moins une couche de revêtement (40) au profilé de positionnement (60) ;
- agencement (140) du profilé de positionnement (60) de sorte que le profilé de positionnement (60) coopère avec la première paroi latérale (24) du sillon (18), la deuxième paroi latérale (26) du sillon (18) et la nervure (30) pour maintenir la ligne de couture (LC) en regard de la nervure (30).
